# FASCICULE DE BREVET EUROPEEN

(11) **EP 4 424 423 B1**
(45) Date de publication et mention de la délivrance du brevet: **02.07.2025**
(21) Numéro de dépôt: 24160047.7
(22) Date de dépôt: 27.02.2024
(51) Int. Cl.: B05B 3/10, B05B 15/50

(54) **DISPOSITIF DE PULVÉRISATION CENTRIFUGE DE LIQUIDE AVEC ÉTANCHÉITÉ DYNAMIQUE SANS FRICTION**
ZENTRIFUGALE FLÜSSIGKEITSSPRÜHVORRICHTUNG MIT REIBUNGSFREIER DYNAMISCHER ABDICHTUNG
CENTRIFUGAL LIQUID SPRAY DEVICE WITH FRICTIONLESS DYNAMIC SEALING

(30) Priorité: 28.02.2023 FR 2301871
(43) Date de publication de la demande: 04.09.2024
(73) Titulaire: Devea, 44360 Saint-Etienne de Montluc (FR)
(72) Inventeur: GILET, Morgan, 22350 Caulnes (FR)
(74) Mandataire: Vidon Brevets & Stratégie

(56) Documents cités:
- CN-U- 214 917 180
- FR-A1- 2 472 954
- FR-A1- 3 055 106

## Description

### Domaine technique de l'invention

La présente invention appartient au domaine technique des dispositifs de pulvérisation centrifuge de liquide. La présente invention concerne plus particulièrement de tels dispositifs dans lesquels l'étanchéité est réalisée de manière dynamique.

### Arrière-plan technique

A l'heure actuelle, les dispositifs de dispositifs de pulvérisation centrifuge de liquide connus de l'homme du métier comprennent typiquement un moteur électrique rotatif mobile en rotation autour d'un axe et disposé dans un fourreau concentrique, un support de disque monté sur l'axe du moteur et un disque rotatif de faible épaisseur fixé sur ce support de disque. Le moteur permet de mettre le disque en rotation à une vitesse très élevée. Le fourreau est généralement coiffé d'une capsule dont la face supérieure est très proche de la face inférieure du disque sans toutefois être en contact avec elle. Un réseau de canalisations formés dans le fourreau et la capsule de manière à former un réseau continu et étanche permet d'introduire le liquide à pulvériser dans ces dispositifs de pulvérisation. La vitesse du disque étant très élevée, le liquide est fractionné en une multitude de gouttelettes de très petites dimensions dès qu'il arrive en contact avec le disque, et ces gouttelettes sont alors projetées à grande vitesse dans toutes les directions, dans le plan du disque. De tels dispositifs sont par exemple connus de FR 3 055 106 A1, FR 2 472 954 A1 et CN 214 917 180 U.

Dans de tels dispositifs de pulvérisation centrifuge de liquide, alors que la quasi-totalité du liquide est pulvérisé, il arrive que des volumes résiduels de liquide n'entrent pas en contact avec la face inférieure du disque rotatif et s'écoulent vers l'axe du moteur, constituant ainsi un risque de défaillance de composants mécaniques, électriques ou électroniques au sein du moteur par corrosion ou par inondation.

Pour pallier un tel risque de défaillance, une solution classique consiste à placer un joint d'étanchéité ou un roulement à billes étanche entre l'axe du moteur électrique (partie tournante) et l'alésage du fourreau (partie fixe) dans le but de confiner les éventuels résidus de liquide en amont des parties sensibles du moteur électrique. Cependant, la vitesse de rotation du moteur électrique étant très élevée, l'usure de ces composants est rapide, ce qui implique de fréquentes opérations de maintenance, voire même un risque de défaillance précoce.

### Exposé de l'invention

Afin de pallier les inconvénients précités, le demandeur a mis au point un dispositif de pulvérisation centrifuge d'un produit liquide permettant d'empêcher la pénétration de liquide dans le moteur électrique, sans avoir recours à des organes d'étanchéité statique tel que des joints d'étanchéité ou des roulements à billes étanches, en profitant de la rotation rapide du moteur pour créer une surpression d'air au voisinage de l'axe de rotation du moteur, ayant pour effet de diriger l'intégralité du liquide de sorte qu'il s'éloigne de l'axe de rotation du moteur.

Plus particulièrement, le demandeur a mis au point un dispositif de pulvérisation centrifuge d'un produit liquide comprenant :
- un moteur électrique rotatif mobile en rotation autour d'un axe de rotation XX', ledit moteur électrique rotatif comprenant une partie arrière de diamètre D et d'axe de symétrie et une partie avant de diamètre d disposée dans le prolongement de ladite partie arrière et de même axe de symétrie, avec d étant inférieur à D,
- une chambre statique) sous forme de fourreau disposé de façon concentrique audit moteur électrique rotatif par rapport audit axe de rotation XX' et entourant partiellement la partie arrière du moteur électrique rotatif, ladite chambre statique présentant une face arrière et une face avant, ladite chambre statique comportant un premier moyen d'acheminement du liquide à pulvériser formé longitudinalement pour permettre audit liquide de circuler depuis la face arrière de la chambre statique jusqu'à la face avant de la chambre statique,
- un support conçu pour être monté de façon concentrique sur la partie avant dudit moteur électrique et sur lequel est fixé
- un objet à symétrie de révolution axiale tel qu'un disque plan, de préférence de faible épaisseur (notamment de l'ordre de 0,1 à 1 mm), ce disque étant apte à être entraîné en rotation à grande vitesse par ledit moteur électrique rotatif,
- une capsule emboitée de manière concentrique sur ladite face avant de 1a chambre statique, de manière que la face supérieure de ladite capsule soit disposée juste en deçà dudit disque plan pour éviter tout contact avec ledit disque plan, en en étant séparé d'une distance ε (de préférence comprise entre 0,05 mm et 0,5 mm), ladite capsule présentant une face latérale intérieure entourant ledit support, ladite capsule comportant un deuxième moyen d'acheminement du liquide à pulvériser formé longitudinalement pour permettre audit liquide de circuler depuis ladite face avant de la chambre statique jusqu'à la face dudit disque plan située en vis-à-vis de la face supérieure de ladite capsule, lesdits premier et deuxième moyens d'acheminement, ladite capsule et ladite chambre statique étant disposés dans ledit dispositif de pulvérisation centrifuge de manière que lesdits premier et deuxième moyens d'acheminement soient en communication fluidique et forme un réseau continu permettent l'acheminement du liquide à pulvériser depuis la face arrière de la chambre statique jusqu'à la face dudit disque plan située en vis-à-vis de la face supérieure de ladite capsule,

le dispositif de pulvérisation selon l'invention étant caractérisé en ce qu'il comprend en outre des orifices borgnes formés radialement dans ledit support et s'étendant radialement vers l'axe XX', et
en ce que ladite face intérieure de ladite capsule présente la forme d'une tuyère divergente dont la section perpendiculairement à l'axe XX' présente un diamètre croissant jusqu'au niveau de la face supérieure de la capsule.

De manière avantageuse, le moteur électrique peut être monté dans le fourreau au moyen de plusieurs vis.

A titre de moyens d'acheminement (premier et deuxième moyens d'acheminement), on utilisera de manière avantageuse des canalisations, et notamment des canalisations cylindriques.

En ce qui concerne les orifices borgnes formés radialement dans le support (notamment par usinage ou moulage, ou tout autre moyen de formage adapté à cette technologie), ils permettent de créer des poches d'air. De préférence, ils peuvent se présenter sous forme d'aubes de turbine ou de cylindres.

La combinaison de la présence des orifices borgnes formés radialement dans le support et la face intérieure de la capsule en forme de tuyère divergente ont pour effet que lorsque le moteur est en rotation rapide, l'air contenu dans les orifices borgnes formés dans le support subit une force centrifuge, créant ainsi un gradient de pression d'air, avec une surpression d'air à l'extérieur des orifices borgnes (ou poches) et une dépression d'air près de l'axe de rotation. La combinaison de la géométrie de la tuyère et de ce gradient de pression d'air induit un débit d'air en direction de l'avant, où le diamètre de l'alésage est plus important. Les canaux favorisant la circulation d'air autour du moteur permettent à ce débit d'air de s'établir de façon stable, de sorte qu'il s'oppose aux éventuels écoulements de liquides en direction de l'axe du moteur tout en les redirigeant vers l'extérieur, garantissant ainsi la mise en contact de l'intégralité du liquide avec la face inférieure du disque rotatif et en conséquence sa pulvérisation et éjection.

De manière avantageuse, le réseau continu permettant l'acheminement du liquide à pulvériser peut être rendu étanche à l'aide de joints toriques disposés respectivement entre la capsule et la chambre statique, ainsi qu'entre le moteur électrique rotatif et le support.

De manière avantageuse, le dispositif selon l'invention peut en outre comprendre un raccord pour introduire le liquide à pulvériser dans le dispositif selon l'invention, ce raccord étant disposé sur la face arrière de la chambre statique de manière à être communication fluidique avec le réseau continu. Le liquide à pulvériser que l'on introduit ainsi dans le dispositif via le raccord peut être mis en mouvement à l'aide d'une pompe (non représentée), pour être ensuite conduit à travers le réseau de canalisations jusqu'à arriver en contact avec la face inférieure du disque.

De manière avantageuse, le dispositif selon l'invention peut en outre comprendre un ventilateur à débit élevé disposé sous le dispositif selon l'invention. Il permet, en créant un flux d'air puissant, de dévier la trajectoire des gouttelettes dans une direction parallèle à l'axe de rotation du disque.

De manière avantageuse, le dispositif selon l'invention peut en outre comprendre en outre un tachymètre adapté pour contrôler la vitesse de rotation du moteur, de manière à éviter que le liquide à pulvériser ne pénètre dans le dispositif selon l'invention lorsque le disque tourne à vitesse nominale.

D'autres avantages et particularités de la présente invention résulteront de la description qui va suivre, donnée à titre d'exemple non limitatif et faite en référence aux figures et aux exemples suivants.

### Brève description des figures

Les exemples suivants illustrent l'invention, en liaison avec les figures commentées ci-dessus, sans toutefois en limiter la portée :
[Fig. 1] : La figure 1 est une représentation schématique en perspective montrant la coupe transversale d'un exemple de dispositif de pulvérisation centrifuge selon l'invention (les parties intérieures du dispositif étant illustrées sur la coupe et les parties extérieures en perspective) ;
[Fig. 2] : la figure 2 est également une représentation schématique en perspective montrant la coupe transversale du dispositif de pulvérisation centrifuge représenté sur la figure 1, mais sans le disque plan rotatif ;
[Fig. 3] : la figure 3 est une représentation schématique en coupe transversale du dispositif de pulvérisation centrifuge représenté sur la figure 1 (avec le disque plan rotatif) ;
[Fig. 4] : la figure 4 est une vue en détail de la figure 3 montrant plus spécifiquement l'emboitement de la capsule 6 sur le fourreau 2 et la face intérieure de la capsule en forme de tuyère ; et
[Fig. 5] : La figure 5 est une représentation schématique en perspective complète du dispositif de pulvérisation centrifuge.

### Description détaillée de l'invention

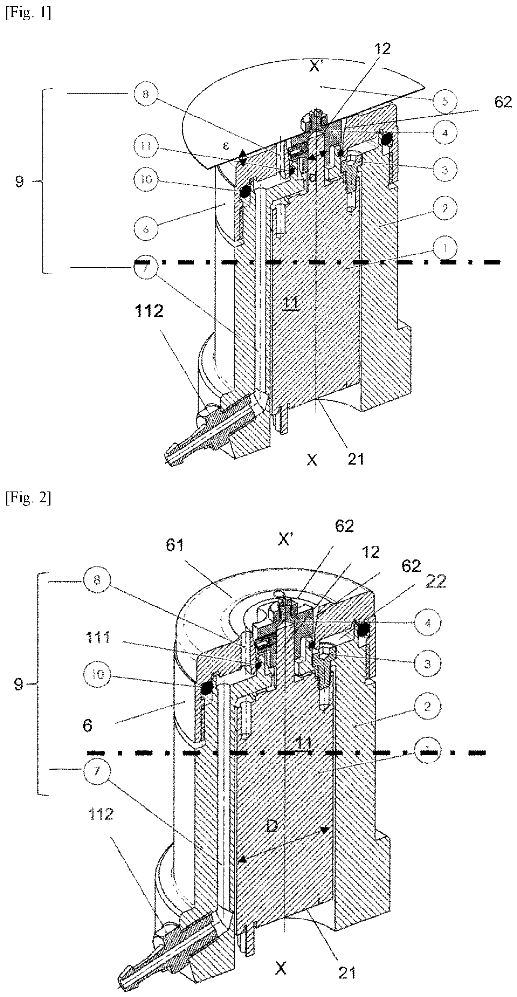

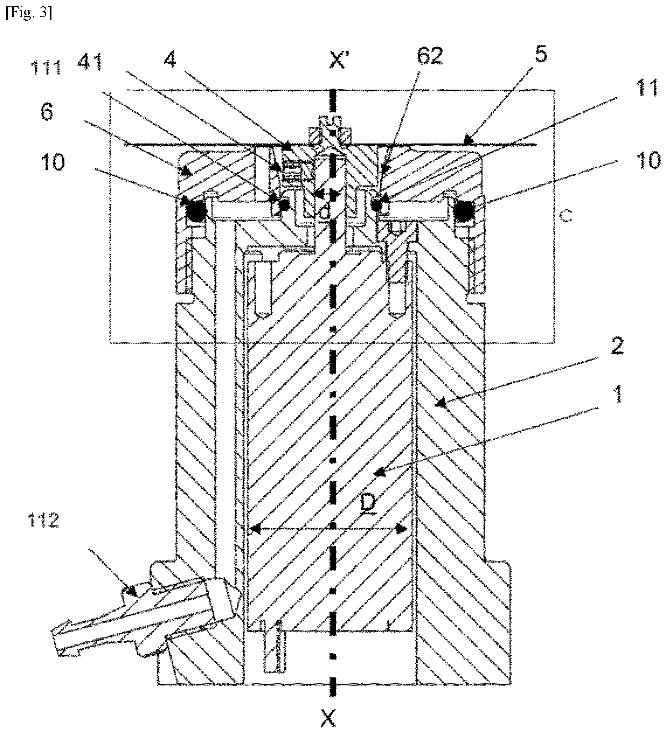

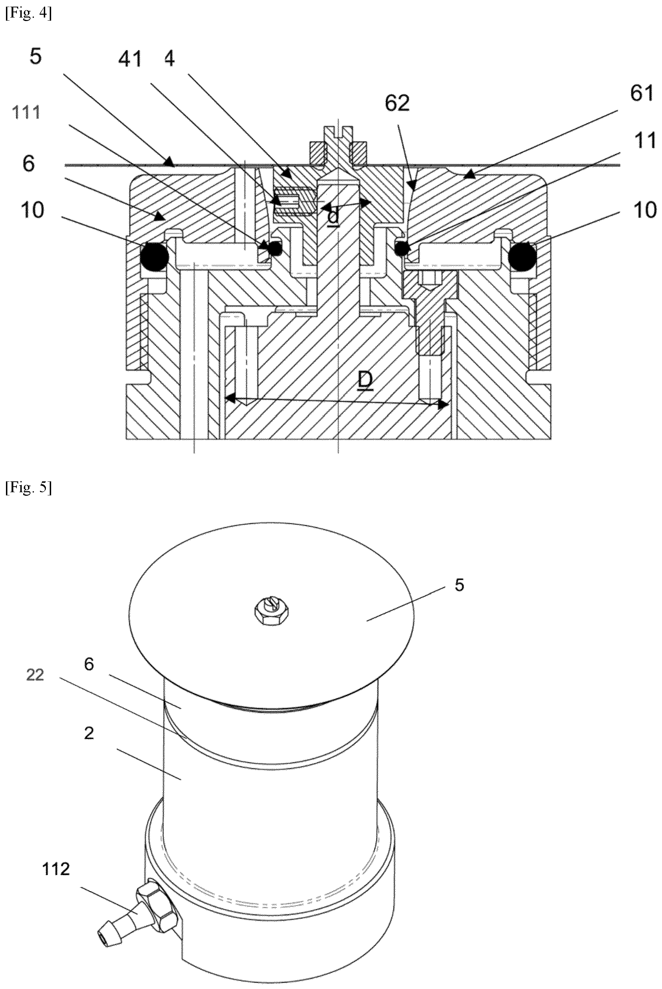

Les figures 1 à 4 illustrent schématiquement un exemple de dispositif de pulvérisation centrifuge selon l'invention 1 comprenant :
- un moteur électrique rotatif 1 mobile en rotation autour d'un axe de rotation XX' et comprenant une partie arrière 11 de diamètre D et d'axe de symétrie XX' et une partie avant 12 de diamètre d disposée dans le prolongement de la partie arrière 11 et de même axe de symétrie XX', avec d étant inférieur à D (D et d visibles sur les figures 3 et 4), le moteur électrique rotatif 1 étant monté au moyen de vis 3 dans
- un fourreau 2 présentant une face arrière 21 et une face avant 22, le fourreau 2 étant disposé concentriquement au moteur électrique rotatif 1 par rapport à l'axe de rotation XX', de manière à entourer partiellement la partie arrière 11 du moteur 1, le fourreau 2 comportant une première canalisation 7 formée longitudinalement pour permettre au liquide de circuler depuis sa face arrière 21 jusqu'à sa face avant 22,
- un support 4 (ou support de disque) conçu pour être monté de façon concentrique sur la partie avant 12 du moteur électrique 1 et sur lequel est fixé
- un disque plan 5 de faible épaisseur (visible sur les figures 1 et 3 uniquement), apte à être entraîné en rotation à grande vitesse par le moteur électrique rotatif 1,
- une capsule 6 emboitée de manière concentrique sur ladite face avant 22 du fourreau 2, de manière que sa face supérieure 61 (visible sur la figure 2 uniquement) soit disposée juste en deçà du disque plan 5 pour éviter tout contact avec le disque plan 5, en en étant séparé d'une distance ε, 1
- la capsule 6 présentant une face latérale intérieure 62 (visible sur les figures 3 et 4) entourant le support 4, la capsule 6 comportant une deuxième canalisation 8 formée longitudinalement pour permettre au liquide de circuler depuis la face avant 22 du fourreau 2 jusqu'à la face du disque plan 5 située en vis-à-vis de la face supérieure de ladite capsule 6, les canalisations 7,8, la capsule 6 et le fourreau 2 étant agencés de manière que les canalisations 7, 8 soient en communication fluidique et forme un réseau continu 9 permettant l'acheminement du liquide à pulvériser depuis la face arrière 21 du fourreau 2 jusqu'à la face du disque plan 5 située en vis-à-vis de la face supérieure de la capsule 6, cette face intérieure 62 présentant la forme d'une tuyère divergente dont la section perpendiculairement à l'axe XX' présente un diamètre croissant jusqu'au niveau de la face supérieure 61 de la capsule 6, et enfin
- des orifices borgnes 41 (visibles sur les figures 3 et 4) sous forme de canaux, notamment cylindriques formés radialement dans le support 4 et s'étendant radialement vers l'axe XX'.

Les figures 1 à 4 montrent par ailleurs que le dispositif 1 selon l'invention comprend en outre des joints toriques (joints statiques) 10 et 111 disposés respectivement entre la capsule 6 et le fourreau 2 (joint 10), et entre le moteur 1 et le support 4 (joint 111), pour rendre étanche le réseau continu 9 permettant l'acheminement du liquide à pulvériser dans le dispositif 1 selon l'invention.

La figure 5 montre en particulier que le dispositif selon l'invention peut en outre comprendre un raccord 112 pour introduire le liquide à pulvériser, ce raccord 112 en communication fluidique avec le réseau continu 9 étant disposé sur la face arrière 22 du fourreau 2.

### EXEMPLES

### EXEMPLE 1 (comparatif)

Sur la période comprise entre 2020 et 2022, la Demanderesse a été amenée à vendre ou à remplacer (opérations de maintenance curative) en moyenne une cinquantaine de moteurs par an sur différentes machines. Ces machines étaient équipées d'une ou deux têtes de diffusion conformes à l'art antérieur : en l'occurrence, ces têtes de diffusion conformes à l'art antérieur comprennent un moteur électrique rotatif mobile en rotation autour d'un axe et disposé dans un fourreau concentrique, un support de disque monté sur l'axe du moteur et un disque rotatif de faible épaisseur fixé sur ce support de disque. Le fourreau est coiffé d'une capsule dont la face supérieure est très proche de la face inférieure du disque sans toutefois être en contact avec elle. Un réseau de canalisations formées dans le fourreau et la capsule de manière à former un réseau continu et étanche permet d'introduire le liquide à pulvériser dans ces dispositifs de pulvérisation. A la différence du dispositif de pulvérisation selon l'invention, il y'a pas d'orifices borgnes formés radialement dans le support, et la face intérieure de la capsule ne présente pas la forme d'une tuyère divergente, mais un joint d'étanchéité ou un roulement à billes étanche entre l'axe du moteur électrique et l'alésage du fourreau. Avec de tels moteurs, il a été constaté un taux de problèmes élevés, en l'occurrence une corrosion générée par la pénétration de liquide le long du rotor constituant la principale source de détérioration des moteurs et donc leur remplacement.

### EXEMPLE 2 (selon l'invention) : pulvérisation centrifuge d'eau

Le dispositif de pulvérisation centrifuge conforme à la présente invention et tel que représenté sur les figures 1 à 5 a été testé sur un diffuseur standard de produit désinfectant, le dispositif habituel (avec étanchéité statique) ayant été remplacé par un prototype de l'invention, dans un environnement peu contraignant : entrepôt avec une hauteur sous plafond de 8 m et en utilisant de l'eau à titre de liquide à pulvériser, de sorte que l'environnement n'était ni saturé (effet de dispersion important dans la totalité du volume de l'entrepôt) ni exposé à des produits chimiques (tests avec de l'eau). Les tests consistaient à vérifier que le liquide ne pénétrait pas en amont de l'axe du moteur. Les tests ont été réalisés sur une durée d'environ 6 mois, correspondant à une soixantaine d'heures de fonctionnement de la machine. A l'issue de cette phase de tests, on a constaté les faits suivants :
- aucune dégradation du moteur, ce qui permet de confirmer l'efficacité du processus d'étanchéification,
- la consommation du moteur à vitesse de rotation nominale n'a pas augmenté par rapport à celle qu'on aurait en utilisant un système d'étanchéité statique, ce qui signifie une absence de dégradation du rendement attribuable à une dégradation,
- enfin, l'examen visuel du moteur montre l'absence de traces de liquide ou de corrosion en amont de l'axe moteur.

### EXEMPLE 3 (selon l'invention) : pulvérisation centrifuge de peroxyde d'hydrogène

Le même dispositif qu'à l'exemple 1 a été utilisé pour travailler dans des conditions normales et habituellement rencontrées dans les secteurs d'activité dans lesquels la société intervient. Ce dispositif été installé dans une salle de 31 m³ avec 2,5 m de hauteur sous plafond. Les opérations de désinfection se sont faites selon les protocoles usuellement proposés par la société : vaporisation de peroxyde d'hydrogène et validation de la performance de décontamination au moyen d'indicateurs biologiques. 15 essais successifs ont été lancés permettant de valider que les résultats obtenus en matière de décontamination étaient conformes aux attentes et que le moteur de la machine n'avait subi aucune dégradation à l'issue de l'ensemble des opérations de tests.

### Références

1 : moteur électrique rotatif
11 : partie arrière du moteur électrique rotatif,
12 : partie avant du moteur électrique rotatif,
2 : une chambre statique,
21 : face arrière
22 : face avant
3 : vis de fixation du moteur 1 dans la chambre statique (description uniquement),
4 : un support de disque-plan,
5 : disque- plan
6 : capsule
61 : face supérieure
62 : face latérale intérieure en forme de tuyère
7 : premier moyen d'acheminement du liquide à pulvériser,
8 : deuxième moyen d'acheminement du liquide à pulvériser
9 : réseau continu comprenant les premier et deuxième moyens d'acheminement 7, 8,
10 : joint torique entre la capsule 6 et la chambre statique 2
111 : joint torique entre le moteur électrique rotatif 1 et le support 4.
122 : raccord.

## Revendications

1. Dispositif de pulvérisation centrifuge d'un produit liquide comprenant :
- un moteur électrique rotatif (1) mobile en rotation autour d'un axe de rotation (XX'), ledit moteur électrique rotatif (1) comprenant une partie arrière (11) de diamètre D et d'axe de symétrie (XX') et une partie avant (12) de diamètre d disposée dans le prolongement de ladite partie arrière (11) et de même axe de symétrie (XX'), avec d étant inférieur à D,
- une chambre statique (2) sous forme de fourreau disposé de façon concentrique audit moteur électrique rotatif (1) par rapport audit axe de rotation (XX') et entourant partiellement la partie arrière (11) dudit moteur électrique rotatif (1), ladite chambre statique (2) présentant une face arrière (21) et une face avant (22), ladite chambre statique (2) comportant un premier moyen d'acheminement (7) du liquide à pulvériser formé longitudinalement pour permettre audit liquide de circuler depuis la face arrière (21) de la chambre statique (2) jusqu'à la face avant (22) de la chambre statique (2),
- un support (4) conçu pour être monté de façon concentrique sur la partie avant (12) dudit moteur électrique (1) et sur lequel est fixé
- un objet à symétrie de révolution axiale tel qu'un disque plan (5), apte à être entraîné en rotation à grande vitesse par ledit moteur électrique rotatif (1),
- une capsule (6) emboitée de manière concentrique sur ladite face avant (22) de ladite chambre statique (2), de manière que la face supérieure (61) de ladite capsule (6) soit disposée juste en deçà dudit disque plan (5) pour éviter tout contact avec ledit disque plan (5), en en étant séparé d'une distance ε, ladite capsule (6) présentant une face latérale intérieure (62) entourant ledit support (4), ladite capsule (6) comportant un deuxième moyen d'acheminement (8) du liquide à pulvériser formé longitudinalement pour permettre audit liquide de circuler depuis ladite face avant (22) de la chambre statique (2) jusqu'à la face dudit disque plan (5) située en vis-à-vis de la face supérieure de ladite capsule (6), lesdits premier et deuxième moyens d'acheminement (7,8), ladite capsule (6) et ladite chambre statique (2) étant disposés dans ledit dispositif de pulvérisation centrifuge de manière que lesdits premier et deuxième moyens d'acheminement (7,8) soient en communication fluidique et forme un réseau continu (9) permettent l'acheminement du liquide à pulvériser depuis la face arrière (21) de la chambre statique (2) jusqu'à la face dudit disque plan (5) située en vis-à-vis de la face supérieure (61) de ladite capsule (6), ledit dispositif de pulvérisation étant **caractérisé en ce qu'**il comprend en outre des orifices borgnes (41) formés radialement dans ledit support (4) et s'étendant radialement vers l'axe (XX') , et
**en ce que** ladite face intérieure (62) de ladite capsule (6) présente la forme d'une tuyère divergente dont la section perpendiculairement à l'axe (XX') présente un diamètre croissant jusqu'au niveau de la face supérieure de la capsule (6).

2. Dispositif selon la revendication 1, selon lequel ledit réseau continu (9) permettant l'acheminement du liquide à pulvériser est rendu étanche à l'aide de joints toriques (10) et (111) disposés respectivement entre ladite capsule (6) et ladite chambre statique (2) et entre ledit moteur électrique rotatif (1) et ledit support (4).

3. Dispositif selon l'une quelconque des revendications 1 et 2, comprenant en outre un raccord (112) pour introduire le liquide à pulvériser dans ledit dispositif, ledit raccord (112) étant disposé sur la face arrière (22) de ladite chambre statique (2) et en communication fluidique avec ledit réseau continu (9).

4. Dispositif selon l'une quelconque des revendications 1 à 3, selon lequel la distance ε entre la face supérieure (61) de ladite capsule (6) et ledit disque plan (5) et comprise entre 0,05 mm et 0,5 mm.

5. Dispositif selon l'une quelconque des revendications 1 à 4, selon lequel lesdits orifices borgnes (41) formés radialement dans ledit support (4) se présentent sous forme d'aubes de turbine ou de cylindres.

6. Dispositif selon l'une quelconque des revendications 1 à 5, comprenant en outre un tachymètre adapté pour contrôler la vitesse de rotation du moteur.

## Patentansprüche

1. Vorrichtung zur Zentrifugalzerstäubung eines flüssigen Produkts, umfassend:
- einen elektrischen Rotationsmotor (1), der in Rotation um eine Rotationsachse (XX') beweglich ist, wobei der elektrische Rotationsmotor (1) einen hinteren Abschnitt (11) mit einem Durchmesser D und einer Symmetrieachse (XX') und einen vorderen Abschnitt (12) mit einem Durchmesser d umfasst, der in der Verlängerung des hinteren Abschnitts (11) angeordnet ist und dieselbe Symmetrieachse (XX') hat, wobei d kleiner als D ist,
- eine Statikkammer (2) in Form einer Hülle, die konzentrisch um den elektrischen Rotationsmotor (1) in Bezug zur Rotationsachse (XX') angeordnet ist und teilweise den hinteren Abschnitt (11) des elektrischen Rotationsmotors (1) umgibt, wobei die Statikkammer (2) eine Rückseite (21) und eine Vorderseite (22) aufweist, wobei die Statikkammer (2) ein erstes Mittel zur Beförderung (7) der zu zerstäubenden Flüssigkeit umfasst, das längs ausgebildet ist, um es der Flüssigkeit zu ermöglichen, von der Rückseite (21) der Statikkammer (2) bis zur Vorderseite (22) der Statikkammer (2) zu zirkulieren,
- einen Träger (4), der ausgeführt ist, um konzentrisch auf dem vorderen Abschnitt (12) des Elektromotors (1) montiert zu werden, und auf dem befestigt sind:
- ein Gegenstand mit axialer Umdrehungssymmetrie, wie eine flachse Scheibe (5), der geeignet ist, in Rotation mit hoher Geschwindigkeit von dem elektrischen Rotationsmotor (1) angetrieben zu werden,
- eine Kapsel (6), die konzentrisch auf die Vorderseite (22) der Statikkammer (2) aufgesetzt ist, so dass die Oberseite (61) der Kapsel (6) direkt unter der flachen Scheibe (5) angeordnet ist, um jeden Kontakt mit der flachen Scheibe (5) zu vermeiden, wobei sie von dieser um einen Abstand ε entfernt ist, wobei die Kapsel (6) eine Innenseitenfläche (62) aufweist, die den Träger (4) umgibt, wobei die Kapsel (6) ein zweites Mittel zur Beförderung (8) der zu zerstäubenden Flüssigkeit umfasst, das längs ausgebildet ist, um es der Flüssigkeit zu ermöglichen, von der Vorderseite (22) der Statikkammer (2) bis zu der Seite der flachen Scheibe (5), die sich gegenüber der Oberseite der Kapsel (6) befindet, zu zirkulieren, wobei die ersten und zweiten Beförderungsmittel (7, 8), die Kapsel (6) und die Statikkammer (2) in der Zentrifugalzerstäubungsvorrichtung derart angeordnet sind, dass die ersten und zweiten Beförderungsmittel (7, 8) in Fluidverbindung stehen und ein durchgehendes Netz (9) bilden und die Beförderung der zu zerstäubenden Flüssigkeit von der Rückseite (21) der Statikkammer (2) bis zu der Seite der flachen Scheibe (5), die sich gegenüber der Oberseite (61) der Kapsel (6) befindet, ermöglichen, wobei die Zerstäubungsvorrichtung **dadurch gekennzeichnet ist, dass** sie ferner Blindöffnungen (41) umfasst, die radial in dem Träger (4) ausgebildet sind und sich radial zur Achse (XX') erstrecken, und dass die Innenseite (62) der Kapsel (6) die Form eines divergierendes Rohrs aufweist, dessen Querschnitt senkrecht auf die Achse (XX') einen steigenden Durchmesser im Bereich der Oberseite der Kapsel (6) aufweist.

2. Vorrichtung nach Anspruch 1, bei der das durchgehende Netz (9), das die Beförderung der zu zerstäubenden Flüssigkeit ermöglicht, mit Hilfe von Dichtungsringen (10) und (111) abgedichtet ist, die zwischen der Kapsel (6) und der Statikkammer (2) bzw. zwischen dem elektrischen Rotationsmotor (1) und dem Träger (4) angeordnet sind.

3. Vorrichtung nach einem der Ansprüche 1 und 2, ferner umfassend einen Anschluss (112), um die zu zerstäubende Flüssigkeit in die Vorrichtung einzuleiten, wobei der Anschluss (112) auf der Rückseite (22) der Statikkammer (2) und in Fluidverbindung mit dem durchgehenden Netz (9) angeordnet ist.

4. Vorrichtung nach einem der Ansprüche 1 bis 3, bei der der Abstand ε zwischen der Oberseite (61) der Kapsel (6) und der flachen Scheibe (5) zwischen 0,05 mm und 0,5 mm beträgt.

5. Vorrichtung nach einem der Ansprüche 1 bis 4, bei der die Blindöffnungen (41), die in dem Träger (4) ausgebildet sind, in Form von Turbinenschaufeln oder Zylindern vorhanden sind.

6. Vorrichtung nach einem der Ansprüche 1 bis 5, ferner umfassend einen Tachometer, der dazu vorgesehen ist, die Rotationsgeschwindigkeit des Motors zu kontrollieren.

## Claims

1. Device for centrifugal spraying of a liquid product comprising:
- a rotary electric motor (1) movable in rotation about an axis of rotation (XX'), said rotary electric motor (1) comprising a rear portion (11) with a diameter D and an axis of symmetry (XX') and a front portion (12) with a diameter d arranged in line with said rear portion (11) and with the same axis of symmetry (XX'), with d being smaller than D,
- a static chamber (2) in the form of a sleeve arranged concentrically with said rotary electric motor (1) with respect to said axis of rotation (XX') and partially surrounding the rear portion (11) of said rotary electric motor (1), said static chamber (2) having a rear face (21) and a front face (22), said static chamber (2) including a first means (7) for routing the liquid to be sprayed formed longitudinally so as to enable said liquid to flow from the rear face (21) of the static chamber (2) as far as the front face (22) of the static chamber (2),
- a support (4) designed so as to be mounted concentrically on the front portion (12) of said electric motor (1) and on which are fastened
- an axisymmetric object such as a planar disc (5), able to be driven in rotation at high speed by said rotary electric motor (1),
- a capsule (6) nested concentrically on said front face (22) of said static chamber (2), so that the upper face (61) of said capsule (6) is arranged just below said planar disc (5) to avoid any contact with said planar disc (5), while being separated by a distance ε, said capsule (6) having an internal lateral face (62) surrounding said support (4), said capsule (6) including a second means (8) for routing the liquid to be sprayed formed longitudinally to enable said liquid to flow from said front face (22) of the static chamber (2) as far as the face of said planar disc (5) located opposite the upper face of said capsule (6), said first and second routing means (7, 8), said capsule (6) and said static chamber (2) being arranged in said centrifugal spraying device so that said first and second routing means (7, 8) are in fluidic communication and forms a continuous network (9) enabling routing of the liquid to be sprayed from the rear face (21) of the static chamber (2) as far as the face of said planar disc (5) located opposite the upper face (61) of said capsule (6), said spraying device being **characterised in that** it furthermore comprises blind orifices (41) formed radially in said support (4) and extending radially towards the axis (XX'), and **in that** said internal face (62) of said capsule (6) is in the form of a divergent nozzle the cross section of which perpendicularly to the axis (XX') has a diameter increasing as far as the upper face of the capsule (6).

2. Device according to claim 1, according to which said continuous network (9) enabling routing of the liquid to be sprayed is sealed using O-ring gaskets (10) and (111) arranged respectively between said capsule (6) and said static chamber (2) and between said rotary electric motor (1) and said support (4).

3. Device according to any one of claims 1 and 2, furthermore comprising a connector (112) for introducing the liquid to be sprayed in said device, said connector (112) being arranged on the rear face (22) of said static chamber (2) and in fluidic communication with said continuous network (9).

4. Device according to any one of claims 1 to 3, according to which the distance ε between the upper face (61) of said capsule (6) and said planar disc (5) is between 0.05 mm and 0.5 mm.

5. Device according to any one of claims 1 to 4, according to which said blind orifices (41) formed radially in said support (4) are in the form of turbine vanes or cylinders.

6. Device according to any one of claims 1 to 5, furthermore comprising a tachometer adapted to control the rotational speed of the motor.
